# EUROPEAN PATENT APPLICATION

(11) **EP 3 689 143 A1**
(43) Date of publication of application: **05.08.2020**
(21) Application number: 20154340.2
(22) Date of filing: 29.01.2020
(51) Int. Cl.: A01P 13/02, A01N 47/36, A01N 43/90

(54) **A HERBICIDAL COMPOSITION AND A METHOD FOR CONTROLLING HARMFUL PLANTS**

(30) Priority: 01.02.2019 PL 42878719
(71) Applicant: Przedsiebiorstwo Uslugowo-Handlowe "CHEMIROL" Sp. z o.o., 88-300 Mogilno (PL)
(72) Inventor: CZERWI SKA, Klaudia, 85-234 Bydgoszcz (PL)
(74) Representative: Lukaszyk, Szymon

(57) **Abstract**

The present invention relates to a herbicidal composition comprising active components, and optionally agriculturally acceptable auxiliary components. The composition of the present invention is characterized in that it comprises tribenuron-methyl, metsulfuron-methyl and florasulam as active components, wherein the weight proportion of tribenuron-methyl relative to the total weight of said three active components of the composition amounts from 35 to 75 % by weight. The present invention relates also to a method for controlling harmful plants using the composition of the invention.

## Description

The present invention relates to a herbicidal composition comprising active components, and optionally agriculturally acceptable auxiliary components, and to a method for controlling harmful plants with using such a herbicidal composition.

### Background of the invention

Tribenuron-methyl, metsulfuron-methyl and florasulam are known herbicides with foliar activity for controlling dicotyledonous weeds. These active substances are used as cereal crop protection agents, in particular used for a protection of crops of winter wheat, winter triticale, rye, spring barley and spring wheat.

Tribenuron-methyl and metsulfuron are compounds from the group of sulfonylurea derivatives and are known from various herbicidal preparations, including for example the preparation Triben® Super 50 SG comprising tribenuron-methyl (active component content: 500 g/kg (50%), Innvigo Sp. z o.o., PL), and the preparation Galmet® 20 SG comprising metsulfuron (active component content: 200 g/kg (20%), Innvigo Sp. z o. o., PL). Florasulam is a compound from the group of triazolopyrimidines and is also known from various herbicidal preparations, such as for example the preparation Saracen® 050 S.C. (active component content: 50 g/l (4,81 %), Nufarm Polska Sp. z o.o., PL).

The above-mentioned herbicides may also occur together in multi-component preparations, usually two-component preparations, however a selection of constituents in such preparations is substantially random or is intended to enhance a spectrum of herbicide activity by simply adding up the effects observed for individual active constituents. In such cases, the group of weeds vulnerable to the first herbicide is added to the group of weeds vulnerable to the second herbicide, and thus both groups of weeds are possible to be controlled simultaneously.

International patent application WO2007006416A2 discloses compositions comprising a safener of the specified chemical formula and active substances selected from the group consisting of several herbicides. This publication discloses tribenuron-methyl, metsulfuron-methyl and florasulam, however, it does not indicate that such a particular selection of combinations of these three herbicides is possible, or that such a selection will be particularly beneficial or that it shall provide any new effects. Furthermore, the scope of protection granted to the European patent EP1903863T3 constituting a counterpart of the above-captioned international application, defines a significantly limited number of the herbicides proposed for the composition, and florasulam has been removed, what means that its use does not constitute the essence of the solution disclosed therein.

There are also known other publications in which combinations of several herbicides are disclosed and broad groups of active components are disclosed including tribenuron-methyl, metsulfuron-methyl i florasulam, but without indicating specific possible compositions of herbicide combinations (for example in publications WO2012097629A1, WO2013159731 A1, AU2012202066A1, WO2008075743A1).

In the field of agriculture, adverse side effects of a herbicide use have been reported for many years, wherein the effects are observed both on plant crops and in the soil where herbicides have been used. Negative side effects of using plant protection products depend on many factors, e.g. a type of crop plants, a herbicide concentration, frequency of an application and a spraying method, as well as climatic conditions, sunlight in a given climate zone and the like.

Requirements for environmental care must, however, be combined with requirements of modern agriculture expecting more versatile solutions, i.e. operating in a wider temperature range, in a wider range of crop development stages, in a wider range of weed development stages and for a broader spectrum of herbicidal activity.

To meet these requirements, well-known solutions are constantly being developed, which include a use of auxiliary agents protecting crop plants, safeners or agents enhancing a herbicide activity (adjuvants) allowing a reduction of herbicide doses.

Another way to improve an effectiveness of using herbicides is to look for the best combinations of two or more herbicides that interact with each other and for which synergistic effects are observed.

However, research on eliminating adverse side effects of herbicides is complicated, as many factors that make up the observed end effects should be controlled at the same time. Frequently observed synergistic effects are strongly dependent on plant types. Individual safeners or adjuvants may also interact with individual herbicides to different degrees. Similarly, observed synergistic effects are different for different groups of weeds, i.e. a given effect may be observed for some species and may not for other weeds. Thus, there still exists a need to develop new ways of reducing harmfulness of plant protection products while maintaining their maximum effectiveness.

### Summary of the invention

The present invention thus relates to a herbicidal composition comprising active components, and optionally also agriculturally acceptable auxiliary components which is characterized in that the composition comprises tribenuron-methyl, metsulfuron-methyl and florasulam as active components, wherein the weight proportion of tribenuron-methyl relative to the total weight of these three active components of the composition amounts from 35 to 75 % by weight, and preferably from 50 to 65% by weight.

In the composition of the present invention, the weight ratio of tribenuron-methyl to metsulfuron-methyl preferably amounts at least 2:1 and/or the weight ratio of tribenuron-methyl to florasulam preferably amounts at least 2:1.

The composition of the present invention preferably comprises the following amounts of the particular active components: tribenuron-methyl in the amount of from 50% do 65% by weight, metsulfuron-methyl in the amount of from 15 do 25% by weight, and florasulam in the amount of from 20% do 35% by weight, based on the total weight of these three active components.

The composition of the present invention preferably comprises at least one non-ionic surface active agent, which preferably may be block copolymer of ethylene oxide and propylene oxide and/or polyether modified trisiloxane.

The present invention relates also to a method for controlling harmful plants which is characterized in that the composition of the present invention as defined above is applied within an area of harmful plants existence and in a synergistically effective amount comprising a dose of at least 10 g of tribenuron-methyl, 4.125 g of florasulam and 3.375 g of metsulfuron-methyl per hectare.

In this method, the composition of the present invention that is free of a surface active agent, may be preferably used, or alternatively the composition of the invention comprising surfactant may be preferably used wherein in such a case a surface active agent is added to such a composition only before an application of the composition onto a crop area.

Thanks to the specific, three-constituent composition of the active components according to the present invention, it is possible to reduce doses of individual herbicides to be used per hectare of crops, and additionally to broaden the activity spectrum of this composition, i.e. to increase the number of weed species allowed to be controlled. An additional advantage is an effective regulation of weed resistance. The combined use of tribenuron-methyl, metsulfuron-methyl and florasulam resulted in a mutual enhancement of herbicidal activity, so that the amounts of individual herbicidal components to be used can be reduced, preserving a herbicidal effect, and even observing a control (vulnerability) of a greater number of weeds than could be expected considering the effect of using individual active substances when used separately in amounts in which they are contained in the present composition.

Therefore in the case of the composition according to the present invention a synergistic effect of the combined use of these three particularly selected herbicide components has been unexpectedly observed, which effect is also associated with the selection of specific preferred weight percentages of these three herbicide components in the composition, which also occur in appropriately selected weight proportions relative to each other.

A wide range of application temperatures, a crop plant safety, an additional absorption route, and simultaneously a residual and foliar activity of the herbicides are also provided according to the present invention. Tribenuron-methyl is a base that has a wide spectrum of activity, but with gaps in controlling certain weed species. It also has a short period of activity. Metsulfuron introduced into the mixture broadens the herbicidal spectrum and prolongs the activity of the composition enabling to obtain activity period amounting from a few to several days. The addition of florasulam also broadens the spectrum of herbicidal activity, and by interacting with other active components ensures a reduction in doses per hectare.

The weight content of tribenuron-methyl in the composition is at least 35 or 40 or 45 % by weight, for example 50 or 55 % by weight, based on the total weight of the three active components according to the present invention. Whereas, the maximum content of tribenuron-methyl in the combination of the three active substances according to the present invention can be 55 or 60 % by weight, more preferably 65, 70 or 75% by weight. Thus, the tribenuron-methyl weight content may be in any range between the indicated minimum and maximum limits, i.e. in particular it may be from 35 to 75 %, from 40 to 70 % by weight, for example from 45 to 65 % or from 50 to 65 % by weight.

The weight content of metsulfuron-methyl in the composition is at least 10, 15, or 20 % by weight based on the total weight of the three active components in the composition. The maximum weight content of metsulfuron-methyl may be 15 or 20%, or 25% or 30% by weight. Thus, the weight content of metsulfuron-methyl can be in any range between the indicated minimum and maximum limits, i.e. in particular it can be from 10 to 30% by weight, more preferably from 15 to 25 % by weight.

The weight content of florasulam in the composition is at least 15 or 20 % by weight based on of the total weight of the three active components according to the present invention. The maximum weight content of florasulam can be 15 or 20, or 25 or 30 % by weight. Thus, the content of florasulam can be in any range between the indicated minimum and maximum limits, i.e. in particular it can be from 15 to 30 % by weight, from 20 to 25 % by weight.

At the same time, in the ternary composition of the present invention, the individual herbicides are selected in specific proportions relative to each other (weight ratio), i.e. the ratio of the tribenuron-methyl weight to the metsulfuron-methyl weight is from at least 1.5:1.0, more preferably 2.0:1.0, to 3.0:1.0 or even 4.0:1.0, and the ratio of the tribenuron-methyl weight to the florasulam weight is from 1.5:1.0, more preferably 2.0:1.0, to 3.0:1.0, and even 4.0:1.0. Thus, in the composition according to the present invention tribenuron-methyl is the dominant herbicide, the amount of which in the composition is greater than the amount of the other two active components individually. Preferably, the amount of methyl tribenuron in the composition of the present invention is greater than the total amount of the other two components. The weight ratio of metsulfuron-methyl to florasulam is from 2.0:1.0 to 1.0:2.0. The amount of these two components in the composition is similar relative to each other, i.e. the amount of one of them can constitute from 75 to 125% of the amount of the other one.

In further embodiments, known auxiliary components used in plant protection products and acceptable in the field of agriculture may be used in the composition according to the invention. These auxiliary components may be known substances selected from the group comprising: solvents, carriers in solid or liquid form, in particular water, emulsifiers, antifoaming agents, surface active agents, dyes, fillers or any other known ingredients. The amount of such auxiliary components in the composition of the present invention can be arbitrary and range from 5 to 95 % by weight, more preferably is less than 50 or 40 % by weight and can be from 10 to 40 % by weight.

In addition to the aforementioned auxiliary components, the composition of the present invention may optionally also comprise herbicide adjuvants. Such adjuvant components comprise surface active agents, crop protection agents and safeners and the like. These adjuvant additives confer additional advantageous properties on herbicide components. Crop plant protection agents or safeners protect crop plants against undesirable effects of herbicides or partially eliminate these adverse effects. Substances of this type can be added to the composition of the present invention and form a homogeneous final product or can be added as a separate preparation to a reservoir containing herbicide prepared for use on crop area.

The main substances enhancing herbicide activity are surface active agents (surfactants) selected from the group comprising nonionic, anionic and cationic surfactants. Such surfactants are well known herbicide additives, as discussed for example in the international patent publication WO9734485A1. However, for various herbicides an appropriate specific group of surfactants is selected, generally depending on a chemical structure of given herbicides. Surfactants are also selected so that they simultaneously show emulsifying and dispersing properties in a given herbicide composition under given conditions.

Herbicide surfactants are usually substances that change the viscosity of a composition, thus increasing an adhesion and coverage of plants by a herbicidal composition. Adjuvants based on surfactants are currently becoming a standard additive to herbicides and have usually a form of a ready-made combination of two or several substances, e.g. surfactants and oily substances of natural and mineral origin as well as buffering agents.

Nonionic surfactants are particularly preferably used in the composition of the present invention, i.e. the composition may preferably comprise at least one surface active agent selected from the group comprising ethoxylated fatty alcohols; polyglycol ethers with aliphatic or cycloaliphatic alcohols or saturated or unsaturated fatty acids and alkylphenols, wherein derivatives of this type comprise 3 to 30 glycol groups and 8 to 20 carbon atoms in the aliphatic hydrocarbon residues and 6 to 18 carbon atoms in the alkyl residues of alkylphenols; water-soluble polyadducts of polyethylene oxide with polypropylene glycol, ethylenediamine polypropylene glycol and alkyl polypropylene glycol containing 1 to 10 carbon atoms in the alkyl chain, wherein such derivatives contain 1 to 5 ethylene glycol units per propylene glycol unit; block copolymers of ethylene oxide and propylene oxide, the latter being preferred. An example of a commercially available product containing block copolymers of ethylene oxide and propylene oxide is Asystent+ ® (Chemirol Sp. z o.o.).

Another preferred group of nonionic surface active agents are polyether modified siloxanes (siloxane surfactants), including polyether modified trisiloxanes, which may also contain free polyethers in a mixture. Polyether modified trisiloxanes are for example known from the publications WO1994022311A1 or WO2016202564A1 (EP3106033T3). Trisiloxanes can be modified with propylene glycol n-butyl ether, dipropylene glycol n-butyl ether, dipropylene glycol methyl ether acetate, tripropylene glycol methyl ether, propylene glycol methyl ether (PM), propylene glycol methyl ether acetate, dipropylene glycol methyl ether, tripropylene glycol monomethyl ether.

Commercially available preparations containing these types of polyether modified trisiloxanes are for example SILWET L-77® (Momentive Performance Materials Inc.), BREAK-THRU® S240 (Evonic Corp.) or Asystent+® (Chemirol Sp. z o.o.).

The composition of the present invention preferably contains multi-component adjuvant compositions (adjuvants) enhancing a herbicide activity which are composed of nonionic surfactants, and which are usually commercially available in a ready-made form. It is preferred to use in the composition a mixture of two surfactants: block copolymers of ethylene oxide and propylene oxide, and polyether modified trisiloxanes. Preferably, the weight ratio between said two surfactants amounts of 1:2 to 2:1, and preferably amounts 1:1. An example of such a ready-made adjuvant is the preparation Asystent+® (Chemirol Sp. z o.o.). This adjuvant contains block copolymers of ethylene oxide and propylene oxide and polyether modified trisiloxane. Said adjuvant is chemically adapted to the composition of the three herbicides. It enables ideal coverage of sprayed plants with liquid even in a very thick crop, facilitates, increases and accelerates a penetration of active substances into a plant, improves effectiveness of foliar preparations, increases a resistance of herbicides against washing out, and thus reduces an amount of herbicides to be applied and costs of plant protection treatments. An amount of the adjuvant (Assistant+®) can be selected so as to ensure an application of 0.05-0.1 l of this agent per hectare, wherein according to the composition of the exemplary adjuvant (Assistant +) it contains surfactants in the amount of 40 % (the two surfactants in a mixture 1:1).

The composition according to the present invention may also contain known safeners in a form of oily additives selected from the group comprising vegetable oils (rapeseed oil, olive oil, sunflower oil, coconut oil), alkyl esters (C₁-C₄, e.g. methyl esters, ethyl esters) of oils of vegetable origin i.e. higher C₈-C₂₂ fatty acids or mineral acids, mixtures thereof, as well as oils of animal origin. In particular, methyl esters of C₁₂-C₁₈ acids, e.g. methyl laurate, methyl palmitate, methyl oleate, may be used.

The composition of the present invention may contain additional herbicides, provided that they do not adversely affect the activity of the essential primary herbicides.

The composition may also further contain other known additives, i.e. fertilizers or safeners, provided that they do not adversely affect the main composition of the three active substances.

The composition of the present invention has preferably a form of a dry powder or granules designed for preparing an application solution, but may also have a form of a solution, a concentrate, a granulate, a powder, a paste, an emulsion, a microencapsulated form and the like. Methods for preparing such products are commonly known and include for example milling, dissoluting, mixing, wet and dry granulation and the like. Realizations of these methods may comprise combining solid and possibly liquid constituent components in different orders. It is also possible to use ready-made compositions of carriers, solvents, auxiliary substances and adjuvants as additives.

The composition of the present invention is preferably dissolved in water and applied as a spray solution onto plants. The composition according to the present invention may be used in various application methods employed in agrotechnics.

### Exemplary embodiments of the invention

Hereinafter, exemplary herbicidal compositions according to the present invention are provided which comprise tribenuron-methyl, metsulfuron-methyl and florasulam, wherein particular amounts expressed in % by weight are calculated with an exclusion of any auxiliaries, i.e. tribenuron-methyl + metsulfuron-methyl + florasulam = 100%. In the specification of the present invention, all percentages relate to % by weight, unless stated otherwise.

The compositions of the present invention are presented more specifically in the Examples below in several variants, listed in Table 1, where seven compositions of the three active substances (TMF) of the present invention are indicated without any auxiliary components. The total weight of the active components amounts 700 g (100%).

**Table 1: Compositions TMF comprising tribenuron-methyl, metsulfuron-methyl iflorasulam (7 Examples)**

| Example no. | Tribenuron-methyl g (% by weight) | Metsulfuron-methyl g (% by weight) | Florasulam g (% by weight) |
|---|---|---|---|
| 1 | 400 (57.1 %) | 135 (19.3 %) | 165 (23.6 %) |
| 2 | 480 (68.6 %) | 100(14.3 %) | 120 (17.1 %) |
| 3 | 400 (57.1 %) | 165 (23.6 %) | 135 (19.3 %) |
| 4 | 350 (50.0 %) | 200 (28.6 %) | 150 (21.4 %) |
| 5 | 350 (50.0 %) | 150 (21.4 %) | 200 (28.6 %) |
| 6 | 300 (42.8 %) | 200 (28.6 %) | 200 (28.6 %) |
| 7 | 275 (39.3 %) | 200 (28.6 %) | 225 (32.1 %) |

In further variants of the composition according to the invention, to 700 g of a mixture of tribenuron-methyl, metsulfuron-methyl and florasulam (composition TMF according to Example 1 of Table 1) was added 100 g (Example 1.1), 200 g (Example 1.2), 300 g (Example 1.3) or 400 g (Example 1.4) of auxiliary components (i.e. fillers, dispersants, drying agents, anti-caking agents, surfactants) in serial mixtures and dry granules containing 12.5%, 22.2% and 30%, 36.4% of auxiliary components were prepared.

Studies on the effectiveness of the compositions of the present invention, i.e. on vulnerability of weeds to this composition, and comparative studies of vulnerability of weeds to the compositions of the invention versus vulnerability to reference herbicides used individually (separately), were carried out for the composition of Example 1.3, i.e. for the composition comprising 400 g/kg of tribenuron-methyl, 165 g/kg of florasulam and 135 g/kg of metsulfuron-methyl (in the total weight of 700 g of active components per kg of the herbicide composition) and auxiliary components in the amount of 300 g/kg (30%) in the following doses: a) 0.025 kg of the composition per hectare (corresponding to: 10 g of tribenuron-methyl + 4.125 g of florasulam + 3.375 g of metsulfuron-methyl), b) 0.025 kg of the composition per hectare in combination with adjuvant Asystent+ in an amount of 0.1 l/ha (corresponding to: 10 g of tribenuron-methyl + 4.125 g of florasulam + 3.375 g of metsulfuron-methyl), and c) 0.03 kg of the composition per hectare (corresponding to: 12 g of tribenuron-methyl + 4.95 g of florasulam + 4.05 g of metsulfuron-methyl).

Thereinafter, an activity of the composition against weeds is presented, wherein the composition has been used at various doses of the composition of the present invention (dose a, b or c) on various exemplary crops.

**Spring barley, spring wheat**

| dose (c): 30 g/ha | |
|---|---|
| Vulnerable weeds: | Chenopodium album, Lamium amplexicaule, Polygonum persicaria, Cirsium arvense, Myosotis arvensis, common chamomile, Thlaspi arvense, Fallopia convolvulus, common poppy, Stellaria media, Lamium purpureum, Capsella bursa-pastoris, rape self-seedings, Galeopsis tetrahit, Tripleurospermum maritimum, Polygonum lapathifolium, Galium aparine |
| Moderately vulnerable weeds: | Euphorbia helioscopia, field speedwell, Centaurea cyanus, Viola arvensis, Veronica persica, Apera spica-venti, Geranium pusillum, Polygonum aviculare |
| Moderately resistant weeds: | field speedwell |

**Spring barley, spring wheat - in a mixture with adjuvant**

| dose (b): 25 g/ha + Asystent+ 0.1 l/ha | |
|---|---|
| Vulnerable weeds: | Chenopodium album, Lamium amplexicaule, Polygonum persicaria, Cirsium arvense, Myosotis arvensis, common chamomile, Thlaspi arvense, common poppy, Stellaria media, Lamium purpureum, Capsella bursa-pastoris, rape self-seedings, Galeopsis tetrahit, Tripleurospermum maritimum, Polygonum lapathifolium, Galium aparine |
| Moderately vulnerable weeds: | Euphorbia helioscopia, field speedwell, Centaurea cyanus, Viola arvensis, Veronica persica, Apera spica-venti, Geranium pusillum, Fallopia convolvulus |
| Moderately resistant weeds: | field speedwell |

**Winter triticale, winter wheat, rye**

| dose (c): 30 g/ha | |
|---|---|
| Vulnerable weeds: | Field gromwell, Lamium amplexicaule, common fumitory, cirsium arvense, Spergula arvensis, common chamomile, Thlaspi arvense, Fallopia convolvulus, common poppy, Centaurea cyanus, Stellaria media, Lamium purpureum, Capsella bursa-pastoris, rape self-seedings, Galium aparine, Anthemis arvensis, Tripleurospermum maritimum, Myosotis arvensis, ivy-leaved speedwell, Galeopsis tetrahit |
| Moderately vulnerable weeds: | Polygonum aviculare, field speedwell, Viola arvensis, Veronica persica, Apera spica-venti, Geranium pusillum |

**Winter triticale, winter wheat, rye**

| dose (b): 25 g/ha + Asystent+ 0.1 l/ha | |
|---|---|
| Vulnerable weeds: | Field gromwell, Lamium amplexicaule, common fumitory, Cirsium arvense, Spergula arvensis, common chamomile, Thlaspi arvense, Fallopia convolvulus, common poppy, Centaurea cyanus, Stellaria media, Lamium purpureum, Capsella bursa-pastoris, rape self-seedings, Galium aparine, Anthemis arvensis, Tripleurospermum maritimum, Myosotis arvensis, ivy-leaved speedwell, Galeopsis tetrahit |
| Moderately vulnerable weeds: | Polygonum aviculare, field speedwell, Viola arvensis, Veronica persica, Apera spica-venti, Geranium pusillum |

Table 2 below shows a comparison of the spectrum of an activity (effectiveness in controlling weeds) of the composition of the invention for doses a, b and c (results are placed in three columns on the left side of the table) against an activity of particular three reference herbicides (three right columns of the table). For the compositions of the present invention, the experimentally determined weed vulnerabilities are indicated in greater detail, wherein the results demonstrating that the weeds are vulnerable (at a level of 85 % and higher percentage), are underlined. In addition, bolded font indicates effectively controlled weeds and satisfactory vulnerability results that do not appear for the reference herbicides.

For the reference herbicides (that were used individually) it is marked with the letter "W" that a given active substance is effective against weed, i.e. when it combats this weed at a level of 85 % or higher percentage. Other weeds (without the "W" marking) are outside the reference herbicide activity spectrum (combating at a level below 85 %). To obtain a reliable comparison of the compositions of the invention in relation to the reference herbicides used individually, only vulnerable weeds (at a level of at least 85%) were compared, and the data of these reference herbicides were taken from the labels of the preparations discussed at the outset of this description (Triben® Super 50 SG, Galmet® 20 SG, Saracen® 050 S.C.). The labels for these exemplary reference herbicides are available on the website of the Ministry of Agriculture (https://www.gov.pl/web/rolnictwo/wyszukiwarka-srodkow-ochrony-roslin).

37 efficacy experiments were conducted during the examinations of the compositions of the present invention. The tests were carried out in accordance with the rules of the Good Experimental Practice (DPE) and the guidelines of the EPPO, European and Mediterranean Plant Protection Organization (https://www.eppo.int/)

| | |
|---|---|
| 1/93(3) | Weeds in winter wheat |
| 1/152(4) | Design and analysis of efficacy evaluation trials for plant protection agents |
| 1/135(3) | Phytotoxicity assessment |
| 1/181(4) | Conduct and reporting of efficacy evaluation trials including good experimental practice |

All observations and applications were made in accordance with the test protocol provided by the representative of the company Chemirol Sp. z o.o.

The objects were placed on a field in a random block arrangement in 4 replicates with untreated (control) plots. The size of a single plot was 12.5 m² (2.5 m x 5 m). The results are presented as percentage values of destruction using a scale from 0 to 100, where 0 - ineffectiveness, 100 - complete destruction of weeds. Both, before applying a given composition and on each assessment day, the number of individual weeds in the control plots was determined on an area of 1 m². Statistical calculations were performed using the statistical software ARM 9.0. The study results were statistically elaborated using the Student-Newman-Keuls test at a significance level p = 0.05. The average results for several experiments are shown in Table 2.

**Table 2: Comparison of weed vulnerabilities with a use of the composition TMF of Example 1.3 (the dose per hectare as in the variant a), b), c)) versus weed vulnerabilities for the same herbicides but used individually in the indicated dosed per hectare**

| | a) 25 g TMF | b) 25 g TMF+ adjuvant 10g T, 4.125 g F, 3.375 g M | c) 30 g TMF 12 g T, 5 g F, 4 g M | Saracen® 050 S.C. 5 g of florasulam | Triben® 50 SG 15 g of tribenuron | Galmet® 20 SG 6 g of metsulfuron |
|---|---|---|---|---|---|---|
| | 10 g T, 4.125 g F, 3.375 g M | | | | | |
| **Field gromwell** | 83.58 | **90.85** | **90.43** | | | |
| Lamium amplexicaule | 86.30 | 90.64 | 88.96 | | | W |
| **Common fumitory** | **85.97** | **96.13** | **92.25** | | | |
| **Cirsium arvense** | **85.43** | **94.47** | **92.32** | | | |
| **Sperqula arvensis** | **86.28** | **96.25** | **92.28** | | | |
| **Common chamomile** | **87.52** | **94.63** | **93.48** | | | |
| Thlaspi arvense | 84.80 | 93.77 | 90.03 | W | | W |
| Fallopia convolvulus (climbing buckwheat) | 86.65 | 94.52 | 90.43 | | | W |
| Field speedwell | 72.37 | 77.02 | 77.13 | | W | |
| Common poppy | 85.98 | 88.40 | 90.35 | W | | W |
| Centaurea cyanus | 86.67 | 86.65 | 89.27 | | W | |
| Viola arvensis | 78.85 | 83.15 | 84.69 | | | W |
| Stellaria media | 91.34 | 93.05 | 94.43 | W | W | W |
| Lamium purpureum | 81.42 | 85.85 | 88.97 | | | W |
| Capsella bursa-pastoris | 84.27 | 91.30 | 90.05 | W | W | W |
| Rape self-seedings | 85.69 | 91.89 | 91.04 | W | | |
| Galium aparine | 83.23 | 85.75 | 85.69 | W | | |
| **Anthemis arvensis** | **91.38** | **94.75** | **93.15** | | | |
| Tripleurospermum maritimum | 90.57 | 92.93 | 93.65 | W | | W |
| Myosotis arvensis | 83.73 | 88.40 | 88.90 | W | | |
| Ivy-leaved speedwell | 81.90 | 85.95 | 85.35 | W | | |
| Galeopsis tetrahit | 88.14 | 96.22 | 94.39 | | | W |
| **Hypochaeris radicata** | **97.25** | **94.25** | **99.50** | | | |
| **Ivy-leaved speedwell** | 82.50 | 80.00 | **85.00** | | | |
| Chenopodium album | | | | | W | |
| W - Weed that is vulnerable to a reference herbicide | | | | | | |
| T - Tribenuron-methyl | | | | | | |
| M - Metsulfuron-methyl | | | | | | |
| F - Florasulam | | | | | | |
| TMF - the composition of Example 1 from Table 1, comprising Tribenuron-methyl, Metsulfuron-methyl and Florasulam, wherein these active components constitute 70 % by weight of the composition, and auxiliary components constitute the remaining 30 % by weight of the composition (Example 1.3) | | | | | | |
| Bold type indicates weed vulnerability (the composition effectiveness) in cases where it is not present for the reference herbicides | | | | | | |

The experimental results presented in Table 2 demonstrate that an extension of the spectrum of efficacy of the compositions of the invention in a comparison to reference herbicides was achieved. As compared to the combined effects of tribenuron-methyl, metsulfuron-methyl and florasulam used individually, the new composition of the present invention has a broader spectrum of weeds possible to be controlled increased by 8 weed species for a dose of 30 g/ha (dose c) and by 7 weed species for a dose 25 g/ha + 0.1 l/ha Asystent+ (dose b) and by 6 weed species for a dose of 25 g/ha (dose a), wherein 5 weeds from these species are the most important weeds for winter cereals. The presence of these weeds reduces quality and quantity of a crop as well as the quality of straw.

Harmfulness of weeds that can be controlled using the synergistic composition of the present invention and which are not vulnerable to the individual active substances contained in the composition (reference herbicides) are discussed in more detail below.

**Table 3: A list of weeds and a description of harmfulness of the weeds, by which the spectrum of activity of the compositions according to the present invention has been broadened (according to Example 1.3).**

| Weed species | The dose of the composition of Example 1.3 resulting in controlling the weed | Significant for crops of: | Harmfulness description ^{(*)} |
|---|---|---|---|
| Field gromwell | 25 g/ha + 0.1 l/ha Asystent+ | - | it is very nuisance weed; it destroys winter and spring cereals; it hinders harvesting and reduces a straw value; it competes heavily in the race for minerals and the sun; it is a carrier of fungal diseases; it is very often attacked by pests that move to crops, and thus reduces a harvest quality |
| | 30 g/ha | | |
| Common fumitory | 25 g/ha | Winter wheat | it is dangerous at a mass occurrence during a germination of winter and spring cereals - more often it germinates in spring |
| | 25 g/ha + 0.1 l/ha Asystent+ | | |
| | 30 g/ha | | |
| Cirsium arvense | 25 g/ha | Winter wheat | it is a perennial species; it is competitive in all respects (food, light, water, difficult harvesting) against crops; with a density of 2 plants per 1 m² of crop, it decreases in a cereal crop even by up to 20%. |
| | 25 g/ha + 0.1 l/ha Asystent+ | | |
| | | Winter triticale | |
| | 30 g/ha | | |
| Spergula arvensis | 25 g/ha | | it is a segetal weed; it most often weeds cereals (mainly spring cereals) |
| | 25 g/ha + 0.1 l/ha Asystent+ | | |
| | 30 g/ha | | |
| Common chamomile | 25 g/ha | Winter wheat | it is a fast-growing, competitive species - it absorbs water and nutrients, it shadows strongly in the early stages of growth |
| | 25 g/ha + 0.1 l/ha Asystent+ | | |
| | | Winter triticale | |
| | 30 g/ha | Winter rye | |
| Anthemis arvensis | 25 g/ha | Winter triticale | it is a competitive plant for winter cereals, especially winter wheat; an economic nuisance threshold is 3-6 plants per m^{2 (*)} |
| | 25 g/ha + 0.1 l/ha Asystent+ | | |
| | | Winter rye | |
| | 30 g/ha | | |
| Hypochaeris radicata | 25 g/ha | - | it is a species of a perennial plant reaching a height of 25 to 80cm |
| | 25 g/ha + 0.1 l/ha Asystent+ | | |
| | 30 g/ha | | |
| Ivy-leaved speedwell | 30 g/ha | Winter wheat | it comprises winter and spring species (including wintering species) that are competitive especially when they germinate in autumn |
| | | Winter rye | |

| | | | |
|---|---|---|---|
| ⁽*⁾ Source: Metodyka integrowanej ochrony - pszenica, pszenzyto, zyto - Instytut Ochrony Roslin, Państwowy Instytut Badawczy; Atlas chwastów dla praktyków - Polskie Wydawnictwo Rolnicze. | | | |

The presented advantageous effects of broadening the spectrum of activity of the composition were observed despite the reduction of herbicide doses relative to the recommended doses for individual reference herbicides. At a high dose of the composition (dose c), 12 g of tribenuron-methyl, 5 g of florasulam and 4 g of metsulfuron-methyl per hectare were used, while the doses of reference herbicides were respectively 15 g of tribenuron-methyl (Triben® 50 SG), 5 g of florasulam (Saracen® 050 SC) and 6 g metsulfuron-methyl (Galmet® 20 SG). For tribenuron-methyl and metsulfuron-methyl, the dose reduction was at least 20%. At a lower dose (dose a), the reductions in herbicide doses in the composition relative to reference herbicides were even greater.

In addition, it should also be emphasized that the development of the synergistic composition and the reduction of herbicide doses may allow controlling and preventing a resistance of weeds which are important to be controlled in growing winter cereals. It is known that in some circumstances weeds demonstrate a resistance to individual active substances, despite the fact that they are indicated in the herbicide characteristics as fully destroyed (vulnerable). Although the components of the compositions of the present invention belong to the same group of ALS inhibitors, they differ in an absorption by weeds. Tribenuron-methyl and florasulam are absorbed through leaves while metsulfuron-methyl is absorbed mainly through roots and leaves. Different ways of absorbing particular substances strengthened their activity.

Table 3 is presented below with weeds that are significant for growing winter cereal crops and have shown resistance to individual active substances (source: http://www.weedscience.org/Summary/MOA.aspx).

**Table 3: The observed episodes of weed resistance against individual herbicides**

| No | Year | Species | Country | MOAs | Active components |
|---|---|---|---|---|---|
| 1 | 2002 | Tripleurospermum maritimum | GB | ALS inhibitors (B/2) | metsulfuron-methyl |
| 2 | 2000 | Stellaria media | GB | ALS inhibitors (B/2) | florasulam, metsulfuron-methyl |
| 3 | 2013 | Stellaria media | BE | ALS inhibitors (B/2) | metsulfuron-methyl |
| 4 | 2014 | Common poppy | BE | ALS inhibitors (B/2) | florasulam, metsulfuron-methyl |
| 5 | 2016 | Common poppy | FR | ALS inhibitors (B/2), Synthetic Auxins (O/4) | metsulfuron-methyl |
| 6 | 2012 | Common chamomile | BE | ALS inhibitors (B/2) | metsulfuron-methyl |
| 7 | 1996 | Stellaria media | IE | ALS inhibitors (B/2) | metsulfuron-methyl |
| 8 | 2002 | Stellaria media | NO | ALS inhibitors (B/2) | metsulfuron-methyl, tribenuron-methyl |
| 9 | 2001 | Common poppy | GB | ALS inhibitors (B/2) | metsulfuron-methyl |
| 10 | 2007 | Common poppy | FR | ALS inhibitors (B/2) | metsulfuron-methyl |
| 11 | 2012 | Stellaria media | FR | ALS inhibitors (B/2) | florasulam metsulfuron-methyl |
| 12 | 2010 | Tripleurospermum maritimum | FR | ALS inhibitors (B/2) | metsulfuron-methyl |
| 13 | 2014 | Common poppy | PL | ALS inhibitors (B/2) | florasulam metsulfuron-methyl |
| 14 | 2014 | Tripleurospermum maritimum | PL | ALS inhibitors (B/2) | tribenuron-methyl |
| 15 | 2014 | Common chamomile | PL | ALS inhibitors (B/2) | tribenuron-methyl |

The composition according to the present invention demonstrated slightly lower vulnerability with respect to field speedwell and Viola arvensis. However, control efficacy tests performed with Triben® Super 50 SG on winter cereals showed that this agent (alone) at a dose of 20 g/ha was not effective at a level of 85%. The vulnerability of this weed probably depends strongly on atmospheric conditions, and although the label of this agent indicates a vulnerability of speedwell (already at a dose of 15 g/ha) it was achieved in experimental studies neither for the comparative single agent - tribenuron-methyl, nor for the composition according to the present invention. Probably a dry year with a high sunlight, in which the tests were performed, affected this weed by interfering with the action of the herbicides.

In turn, with respect to Viola arvensis, it should be noted that it is only vulnerable to metsulfuron-methyl. The recommended dose for the reference agent Galmet® 20 SG is 6 g per hectare, and in the composition of the present invention it was significantly reduced (by at least 33%), which probably reduced vulnerability of this weed to the ternary composition.

Chenopodium album did not occur in the experimental studies and it is not possible to assess vulnerability for this weed.

Despite the above changes in weed vulnerability, the composition according to the present invention should be considered as synergistically effective for a broadened spectrum of a herbicidal activity, while maintaining a reduced dose of herbicides per hectare.

## Claims

1. A herbicidal composition comprising active components, and optionally agriculturally acceptable auxiliary components, **characterized in that** the composition comprises tribenuron-methyl, metsulfuron-methyl and florasulam as active components, wherein the weight proportion of tribenuron-methyl relative to the total weight of said three active components of the composition amounts from 35 to 75 % by weight.

2. The herbicidal composition according to Claim 1, **characterized in that** the weight proportion of tribenuron-methyl amounts from 50 to 65 % by weight relative to the total weight of said three active components of the composition.

3. The herbicidal composition according to Claim 1 or 2, **characterized in that** the weight ratio of tribenuron-methyl to metsulfuron-methyl amounts at least 2:1.

4. The herbicidal composition according to Claim 1 or 2 or 3, **characterized in that** the weight ratio of tribenuron-methyl to florasulam amounts at least 2:1.

5. The herbicidal composition according to any one of Claims 1-4, **characterized in that** the composition comprises
tribenuron-methyl in the amount of from 50% do 65% by weight, metsulfuron-methyl in the amount of from 15 do 25% by weight, and
florasulam in the amount of from 20% do 35% by weight,
based on the total weight of said three active components.

6. The herbicidal composition according to any one of Claims 1-5, **characterized in that** the composition comprises at least one non-ionic surface active agent.

7. The herbicidal composition according to Claims 6, **characterized in that** said at least one non-ionic surface active agent comprises block copolymer of ethylene oxide and propylene oxide and/or polyether modified trisiloxane.

8. A method for controlling harmful plants, **characterized in that** the composition defined in any one of Claims 1-7 is applied within an area of harmful plants existence and in a synergistically effective amount comprising a dose of at least 10 g of tribenuron-methyl, 4.125 g of florasulam and 3.375 g of metsulfuron-methyl per hectare.

9. The method for controlling harmful plants according to Claim 8, **characterized in that** the composition that is free of surface active agents is used, or the composition comprising surface active agents is used, wherein the surface active agents that are not comprised in the initial composition, are added to the composition only before an application of the composition onto a crop area.
